# EUROPEAN PATENT SPECIFICATION

(11) **EP 0 632 558 B1**
(45) Date of publication and mention of the grant of the patent: **25.03.1998**
(21) Application number: 94106099.8
(22) Date of filing: 20.04.1994
(51) Int. Cl.: H02H 3/087, B60R 16/02

(54) **Automatic resetting protection device to counter short circuits in the on board electrical system of motor vehicles**
Schutzeinrichtung mit automatischer Rückstellung gegen Kurzschlüsse in elektrischen Systemen an Bord von Kraftfahrzeugen
Dispositif de protection à refermeture automatique contre les court circuits dans des systèmes électriques de bord de véhicules à moteurs

(30) Priority: 30.06.1993 IT TO930478
(43) Date of publication of application: 04.01.1995
(73) Proprietor: FIAT AUTO S.p.A., 10135 Torino (IT)
(72) Inventor: Di Nunzio,Vittorio, I-10100 Torino (IT)
(74) Representative: Di Francesco, Gianni

(56) References cited:
- EP-A- 0 279 168
- DE-C- 4 110 240
- GB-A- 2 228 377
- US-A- 3 935 511

## Description

This invention refers to an automatic resetting protection device to counter short circuits in the on board electrical system of motor vehicles.

The on board electrical system of modern motor vehicles has reached levels of complexity and magnitude which were unthinkable just a few years ago, this is due to the increasing use of not only the electronic control of chassis motors (ABS, ARS, power steering, 4WD), but also to the adoption of various servo-actuators such as electric seats, electric side mirrors, power windows, door locks, air-conditioning etc..

It can be said that there is no part of the bodywork, of the finishing or of the frame which remains untouched by cables, connections or electric actuators.

This extensive use of the wiring harness, its placement in metal boxes and its passage through holes in the sheet metal give rise to problems of accidental short-circuits which could seriously damage the motor vehicle or worse.

If we exclude short circuits which occur on user equipments, which are usually protected by individual fuses or fuses which are common to more then one piece of equipment, there are two types of trigger situations for short-circuits in the on board electrical system.

The first type of short circuits, normally intermittent, might be caused by the pinching of the cables against the sheet metal or by the rubbing of the insulating material against metal edges as a result of vibrations, atmospheric conditions or likewise which might occur during the whole life of the motor vehicle.

The second type of short-circuits might be caused by a collision which deforms the vehicle's chassis and bodywork and so pinches the tension cables between metal areas.

At this point it is worthwhile referring to a general diagram of the vehicle electrical system in order to clarify the terms of the invention.

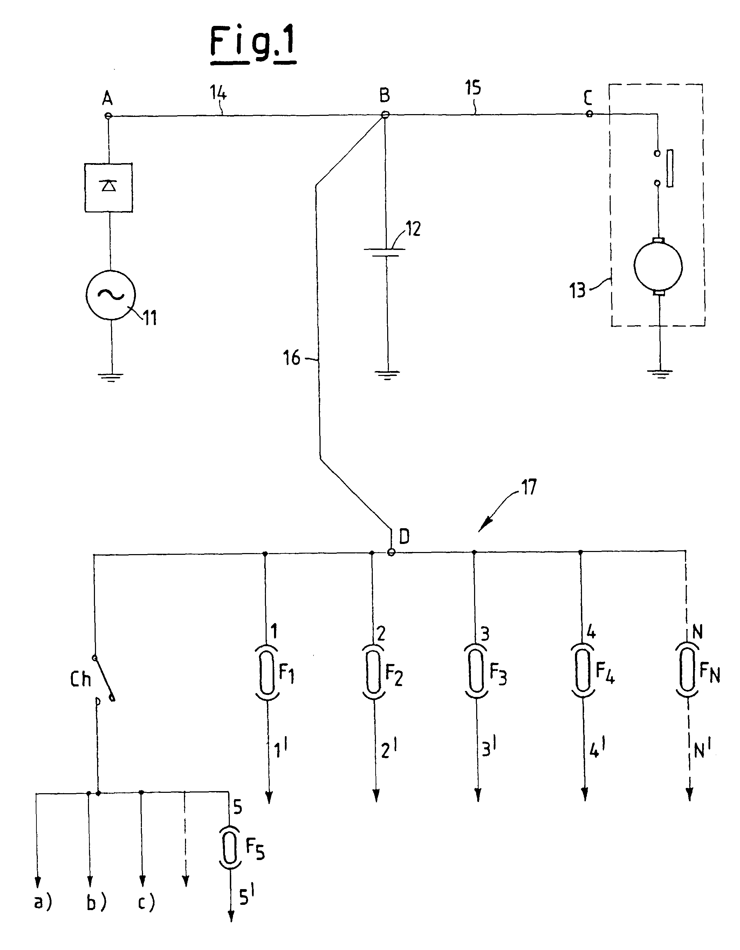

In figure 1 a basic diagram of a typical car system is shown.

An alternator 11, a battery 12, an electric starter 13 are shown.

The alternator 11 and the battery 12 are connected by means of a cable 14, indicated by A - B, through which the current from the alternator runs, i.e. the maximum current equal to that of the alternator.

The length B - C is a large diameter cable 15 through which the current for the starter 13 runs, equal to a few hundred amperes -

Through the cable 16, shown by the length B - D, from the battery to the branch point D, all the current absorbed by the unit 17 passes.

Lengths D - 1, D - 2, ......, D - N are lengths from the branch point D to the corresponding protection fuses shown by F1, F2, ...., FN, which can also be physically contained or integrated, wholly or partly, into a fuse carrier unit.

The length 18 between D - Ch and the branches a), b), c) etc. from the branch point D to the key switch and to the subsequent branches a), b), c), etc., are not protected by fuses. A further section D - Ch - 5 with a corresponding protection fuse F5 or fuses is also connected to this length.

It can be seen that there is a whole harness area, consisting of live cables, where there is no fuse protection or any other break means against short-circuits. This concerns all the branches mentioned above. Indeed, recently, partial or total protections of said cables have been realized by means of large fuses (100 + 150 A) with suitably delayed-action or by means of reduced diameter cable lengths, the so called fuse links, which are of such a size as to fuse if there is a short-circuit and so insulate the system.

It should be noted that the system shown in fig. 1 is in reality partly installed in the engine compartment and partly in the dashboard, that is to say in the fuse carrier unit under the dashboard and in the key switch on the steering column.

Apart from a few exceptions as mentioned above, the live cable area has never been protected for many reasons, some of which are listed below.

The lengths A - B, B - C and B - D,in the engine compartment, are large in diameter, usually 10 + 16 mm2 and so they maintain their assembly positions, therefore if the lay-out and blocking means are chosen correctly, these lengths do not present any problems apart from the need to check their deformation in the case of a frontal collision.

Furthermore any large electromagnetic switch in series to the positive pole of the battery is economically expensive as it must have a current carrying capacity which is adequate for the requirements of the starter motor, keeping in mind that there can even be jumps of 500 A. Another disadvantage of this type of protection would be its lack of effectiveness as it cannot fulfill its task if short-circuits do not occur above said capacity.

To these points there must be added the fact that, in the past, the engine compartment was generally less crowded and therefore even in the case of a collision it was easier to avert the danger of contact with electrical cables. Furthermore the designers have always been reluctant to install a total cut-off device of the electrical power, which if inappropriate , could be the cause of serious harm to the driver.

As previously mentioned there are protection systems for a part or for all of the live cables by means of fuses, the so called fuse link.

Protection by means of one or more fuses for the live cables, since they must have a a large current carrying capacity to allow the system high operating current to pass, raises doubts about its full coverage of any type of breakdown in the protected area.

There are, however, intermittent breakdowns or temporary accidental contacts which do not produce sufficient current for the said means to intervene but create a significant increase in temperature with the possible consequence of fire due to the pinching of cables against the sheet metal or abrasion of the insulating material.

Furthermore in the first type of short circuit mentioned, which can occur mostly in the part of the system downstream from the protection fuses as shown in fig. 1, the currents can be perceived as moderate overloads since they are limited by the cable resistance and, as such, do not cause the intervention of the corresponding fuses.

In this case a fire might be started which cannot be eliminated by removing the key if the part concerned is not controlled by the key.

Therefore it can be said that large fuses or even electromagnetic switches, positioned in series in the length B - D, prevent full short-circuits in the case of frontal collision, but do not prevent partial or temporary short circuits in which the current may be lower than that necessary for the said fuses to fuse.

Furthermore in the case of a rear or side collision or in the case of abrasion of the cables downstream from the fuses, shown by F1 + FN in fig. 1, as already stated the current may not be sufficient to fuse the corresponding fuses F1 + FN nor even the general fuse positioned on the length B - D. The increase in heat may however be high enough to start a fire which often cannot be eliminated by removing the key.

In the past, many protection devices had been discovered to prevent these situations, by creating means with almost total coverage for short circuits occurring in parts of the on-board electrical system of motor vehicles.

For example, DE 41 10 240 discloses a protection device, which is able to disconnect electric apparatus of motor vehicles from the supply in case of failure or in case of overload of current that flows in the cables. As all the current that goes out from the electric starter of motor vehicles flows through the protection device, the protection device itself must comprise a great DC remote control switch and a Hall effect device for evaluating the intensity of the current.

Moreover, US 3,935,511 discloses a current inrush limiter, in which single or multi-phase AC power is rectified to yield a DC voltage, that is adapted to operate an electrical load. A PTC element is inserted in series with the load until a voltage sensitive relay is energized to close its contacts or an SCR is energized to shunt the resistive device out of the circuit. The PTC element, however, is only employed for inserting the load and not even for disconnecting said load, so that this current inrush limiter is not able to protect the on-board electrical system of motor vehicles when the electrical contact of the relay (or the electronic contact of the SCR), which is in parallel to the PTC element, is opened.

The main aim of the present invention is to indicate a device, which gets out of the drawbacks mentioned above, by creating an automatic resetting protection device with almost total coverage both for possible short circuits in the case of a collision of motor vehicles and for those short circuits occurring in any part of the on-board electrical system of motor vehicles, which are perceived as overloads not able to induce the intervention of the corresponding fuses.

An other object of the present invention is to realize a protection device using a very low number of electrical components relative to the state of the art, which have further small sizes and low costs.

With these aims in mind an automatic resetting protection device to counter short circuits in the on-board electrical system of motor vehicles is achieved by the subject-matter of claim 1.

The structural and functional characteristics and the advantages of a device according to this invention are best understood from the detailed description, by way of example only, which refers to the attached diagrammatic drawings in which:
Fig. 2 is a general diagram of a vehicle electrical system including an automatic resetting protection device to counter short circuits according to this invention and
Fig. 3 is a working diagram of said device.

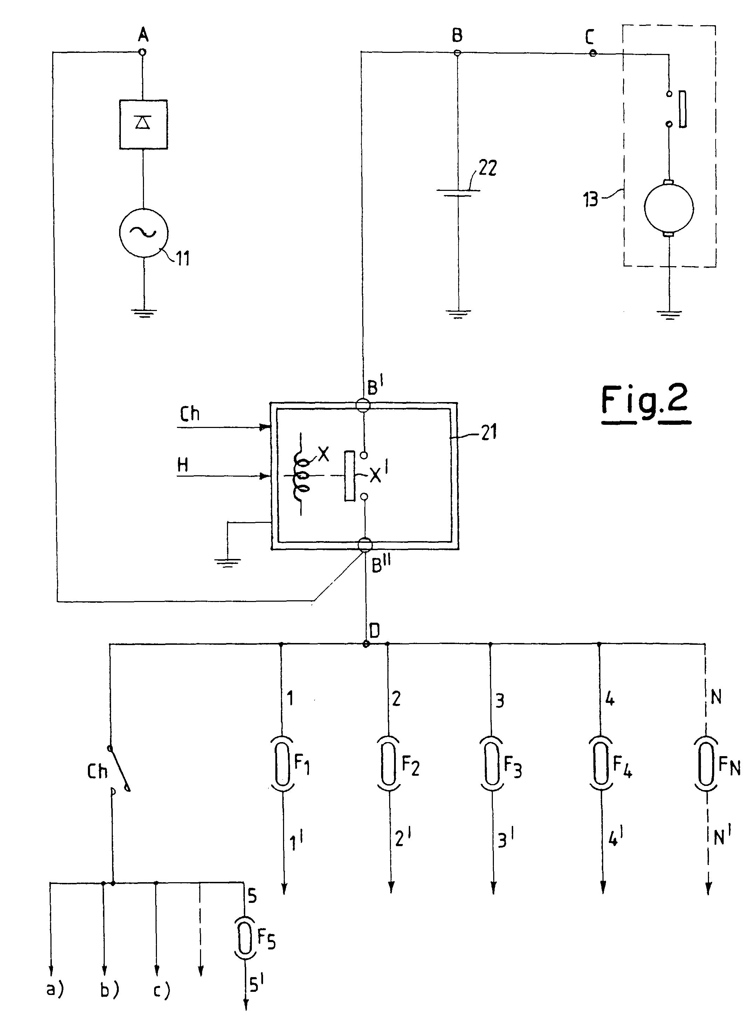

With reference to fig. 2 a live branch B - C carrying a strong current is shown, which is installed and fixed so that it is not affected by any short circuit in the case of a collision.

A protection device 21, realized according to the invention, and the cable length B - B' are installed and appropriately protected against any frontal collision. Such protective measures depend on the type of engine compartment and its layout. The device 21 can be mounted in a place sheltered by the battery 22 or incorporated into the pole itself if such a position is considered sufficiently safe in the possible impact situations. A recharging cable A - B'' is connected, downstream from the device 21, for example, to the node B''.

This said, the system downstream from the node B'' is totally protected by the device 21 as will be described further on, in that it disconnects the whole system downstream from B'' if there is a short-circuit in any section of the live cables.

If the case that a distant part of the system downstream from the key or any of the protection fuses F1 + FN short circuits due to a current lower than the current necessary for the intervention of the corresponding fuse, the simple disengagement of the key causes the device 21 to limit the short-circuit to far less than 1A, thus preventing any damage to the system or to the soundness of the motor vehicle.

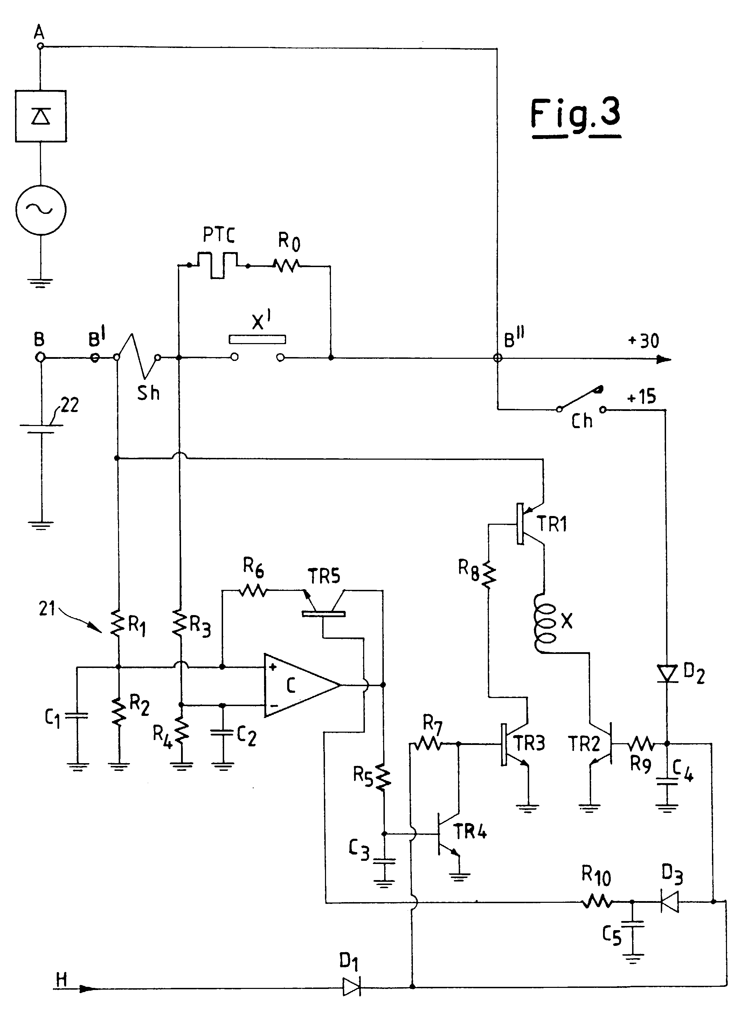

The way of working of the device 21 is described with reference to fig. 3 which shows a preferred but non limiting embodiment.

The device 21 consists of a relay X of which the contact X' is a system sectioning means positioned between point B', which is connected to the positive pole of the battery 22, and point B'' from where all the system starts, and which operates as a branch point in the electrical system of the vehicle.

In series with the contact X' a shunt Sh is inserted, which can absorb the current of a short circuit. In parallel to the contact X' a resistance PTC with a positive temperature coefficient and a resistor RO are inserted. Said resistance PTC represents a flow path for the current from the battery 22 to the system whenever the contact X' is open. This path, thanks to the inserted PTC, does not allow current, above a set value, to pass. This depends on the type of PTC used; generally a 4A PTC is sufficient. If the contact X' is open, which, as will be explained further on, can happen either because there has been a short circuit or because the ignition key contact has been opened, the current, due to the effect of an overload in the system downstream, tends to exceed said value, then the PTC, in a time inversely proportionate to said current strength, automatically increases its resistance thus greatly restricting the actual current growth.

The groups of components R1, R2, R3, R4, C1, C2 consist of voltage dividers and corresponding voltqge filters across the shunt SH. A comparator C indicates when a fall in voltage on the shunt Sh and (therefore the current) rises above a determined level, typically 120 + 150A. If this happens, the output of the comparator C reaches high levels. The comparator C is equipped with appropriate hysteresis consisting of a group R6, TR5, so that once it has been triggered due to an overload, it memorizes said situation, even if the current is interrupted due to the opening of the contact X' in the relay X. This prevents the cyclic opening and closing of the relay on a short-circuit occurrence.

The relay X is controlled by an appropriate safety circuit; in fact it is fed from the positive end by means of the transistor TR1 and from the ground end by means of transistor TR2. The presence of the key in the ON position is sensed by the circuit D2, C4 which by means of the resistance R9 controls the base of the transistor TR2. At the same time it also controls the transistor TR1 by means of R7, TR3 and R8.

If there are no faults in the system downstream from B'',the presence of the key CH in the ON position results in the energizing of the relay X and the consequent closure of the corresponding contact X'. Likewise the opening of the key Ch, in other words when it is in the OFF position, results in the de-energizing of the relay X and the opening of the contact X'. The output of the comparator C determines, through a filter R5, C3, the state, conductivity or non-conductivity, of the transistor TR4 which in turn determines respectively the non-conductivity or conductivity of the transistor TR3, then of TR1 and finally the de-energizing or energizing of the relay X. In effect, whenever the current on the shunt Sh is measured as being over the preset level, the output of the comparator C rises to high levels and, through the above mentioned chain, results in the de-energizing of X and the consequent opening of the contact X'.

The presence of an ignition key signal, by means of the group D3, C5, R10, that is to say when the key Ch is in the ON position, results in the activation of the hysteresis of the comparator C. The hysteresis on the comparator lasts for an adequate length of time after the comparator C has caused the de-energization of the relay X and the consequent opening of the contact X'.

During this period of time the short circuit is fed via PTC, R0 which determines the intervention of the resistance PTC and the zero setting of the voltage at point B''. Consequently the key signal disappears even if the the key Ch remains in the ON position. This results in the transistor TR2 being no longer controlled and in the relay X' being disconnected even from the ground.

In this situation the device 21 remains permanently in this restricted condition, whatever the position of the key Ch, until the short-circuit, which has caused this condition, has been eliminated.

However a period of time, several seconds, must pass, after the elimination of the short-circuit, for the resitance PTC to return to its low resistance state at which the system normally operates when the key is in the ON position.

It has already been mentioned that, since we are dealing with a safety device, the intervention of the protection must be absolutely guaranteed. This guarantee is achieved in the proposed circuit, as already stated, by means of a double control of the coil in relay X, TR1 on the positive end and TR2 on the ground end respectively. Even though the chances of a fault in a transistor, which is positioned in a suitably sized circuit, are extremely low, the circuit shown in fig. 3, with its described redundancy, lowers the probability of a missed intervention to practically zero.

In the circuit a low ohmic resistance R0 is also shown, the resistance of which has the aim of limiting the momentary peaks of current in the resistance PTC to a value which can be tolerated by the resistance PTC.

When the system is operating normally without any short-circuits or overloads, the branch PTC - R0 has different functions which are described hereinafter.

The branch PTC - R0 must allow the node B'' to receive the battery voltage with the key disengaged, i.e. with the relay X de-energized and with therefore the contact X' open. This allows, on ignition, all the circuits connected to the key Ch to be fed and allows the control panel and all its corresponding functions to be turned on.

Moreover, on ignition, it must provide a momentary though extremely high current for a period of time necessary to energize the relay X and close the corresponding contact X'.

The same branch must furthermore allow the battery 22 to feed all the loads which are required when the key is disengaged.

Generally these circuits are the electronic systems which provide for RAM memory devices, the electric clocks, the door locking-unlocking remote control units, the car radios, the anti-theft systems, the parking lights with a total constant load of generally less than 4A. Momentary loads, for example door locking operation, will not require the intervention of the PTC.

Obviously if the sum of the above mentioned loads is higher on some models, then a higher current PTC must be provided.

In this respect it is however appropriate to exclude the cigarette lighter from these loads, providing for its activation only when the key is in the ON position. In fact, if the requirement of the cigarette lighter were included in the above loads, the current carrying capacity of the PTC would have to be notably increased, with the consequence that the device according to this invention would lose much of its ability to select when to intervene against unusual overloads when the key is disengaged.

For a similar reason, an input for emergency lights H, called Hazard, is provided for in fig. 3, the input of which can be derived from one of the side lights.

When the emergency lights are switched on, an alternating voltage appears on the input H, which voltage , through the diode D1, controls the transistors TR1, TR2 and therefore the relay X. This relay, in practice, is controlled by the same intermittence as the emergency function, thus preventing the corresponding current from flowing through the PTC and allowing the use of PTC calibrated to the said level of current.

## Claims

1. An automatic resetting protection device (21) to counter short circuits in the on-board electrical system of motor vehicles, which is inserted between a positive pole (B) of the battery (22) of vehicles and a branch point (B'') of said on-board electrical system, said on-board electrical system comprising an electrical contact of an ignition key (Ch) of the vehicle and a plurality of protection fuses (F1, F2, F3, F4, F5, FN), said protection device (21) also comprising:
• a shunt (Sh) for sensing short circuits, which might arise in any section of the cables of said on-board electrical system;
• voltage dividers (R1, R2, R3, R4, C1, C2,) and corresponding voltage filters at the ends of said shunt (Sh);
• at least one relay (X), with a contact (X'), which is capable of breaking the connection between said positive pole of the battery (22) and said branch point (B'') of the on-board electrical system, said branch point (B'') also being connected to an alternator (11) of the vehicle;
• a comparator (C), which is capable of sensing a maximum current and which has a hysteresis to prevent cyclic opening and closure of said relay (X) on said short circuits, characterised in that:
said contact (X') of the relay (X) is connected in parallel with a little impedance, which is constituted by a resistor (R0) in series to at least one current limitation resistance (PTC), which has a positive temperature coefficient of resistivity, and means (D2,C4,R9,TR2) are provided for de-energizing the relay (X) when said electrical contact of the ignition key (Ch) is in the OFF position, so that, if the contact (X') is open, either because of a short circuit in the on-board electrical system or because the ignition key (Ch) has been disconnected, the current that flows through the on-board electrical system does not exceed a first pre-determined value.

2. A protection device (21) according to claim 1, characterised in that said shunt is connected in series to an impedance, which is constituted by said contact (X') of the relay (X) and said little impedance.

3. A protection device (21) according to claim 1, characterised in that, in case a part of said on-board electrical system or at least one of said protection fuses (F1, F2, F3, F4, F5, FN) short circuits, due to a value of current lower than the value of current necessary for the intervention of the corresponding fuse, the disengageament of the ignition key (Ch) causes said protection device (21) to limit the short circuit to a value less than 1 Ampere.

4. A protection device (21) according to claim 1, characterised in that said current limitation resistance (PTC) allows a value of current equal to or less than 4 Ampere to pass.

5. A protection device (21) according to claim 1, characterised in that said first pre-determined value of current is comprised between 120 and 150 Ampere, extreme values included.

6. A protection device (21) according to claim 1, characterised in that said hysteresis of the voltage comparator (C) is obtained by means of at least one resistance (R6) and at least one transistor (TR5).

7. A protection device (21) according to claim 1, characterised in that said relay (X) is controlled by a safety electric circuit, comprising a plurality of first transistors (TR1, TR2).

8. A protection device (21) according to claim 7, characterised in that the closing of said electrical contact of the ignition key (Ch) is sensed by said means for de-energizing, comprising at least one diode (D2) and at least one capacitor (C4), which, by means of a plurality of resistances (R7, R8, R9) and by means of at least one second transistor (TR3), controls said first transistors (TR1, TR2), said contact (X') of the relay (X) being closed so as to energize said relay (X).

9. A protection device (21) according to claim 7, characterised in that the opening of said electrical contact of the ignition key (Ch) results in the opening of the contact (X'), so as to protect the on-board electrical system from any overload, from the moment the ignition key (Ch) is removed.

10. A protection device (21) according to claim 1, characterised in that said resistor (R0) has a low value of ohmic resistance (R0), in order to limit the momentary peaks of current in said current limitation resistance (PTC).

11. A protection device (21) according to claim 7, characterised in that an input (H) for hazard lights is provided, which is connected with said first transistors (TR1, TR2), through at least one diode (D1) and with said relay (X).

12. A protection device (21) according to claim 1, characterised in that it is capable of interrupting any short circuit current, in the case of a collision of the motor vehicle.

## Patentansprüche

1. Schutzvorrichtung (21) mit automatischer Rückstellung gegen Kurzschlüsse in elektrischen Systemen an Bord von Kraftfahrzeugen, die zwischen einem positiven Pol (B) der Batterie (22) eines Fahrzeugs und einem Verzweigungspunkt (B'') des fahrzeuginternen elektrischen Systems eingeführt wird, wobei dieses elektrische System einen elektrischen Kontakt eines Zündschlüssels (Ch) des Fahrzeugs und eine Vielzahl von Schmelzsicherungen (F1, F2, F3, F4, F5, FN) umfaßt, und wobei die Schutzvorrichtung (21) auch die folgenden Bestandteile umfaßt:
- einen Nebenschlußstromkreis (Sh) zum Messen von Kurzschlüssen, die in jedem Bereich der Kabel des fahrzeuginternen elektrischen Systems auftreten könnten;
- Spannungsteiler (R1, R2, R3, R4, C1, C2) und entsprechende Spannungsfilter an den Enden des Nebenschlußstromkreises (Sh);
- wenigstens ein Relais (X) mit einem Kontakt (X'), das die Verbindung zwischen dem positiven Pol der Batterie (22) und dem Verzweigungspunkt (B'') des fahrzeuginternen elektrischen Systems unterbrechen kann, wobei der Verzweigungspunkt (B'') auch mit einem Wechselstromgenerator (11) des Fahrzeugs verbunden ist;
- einen Komparator (C), der einen maximalen Strom messen kann und der eine Hysterese hat, um ein zyklisches Öffnen und Schließen des Relais (X) bei Kurzschlüssen zu verhindern,
dadurch gekennzeichnet,
daß der Kontakt (X') des Relais (X) mit einem kleinen Wechselstromwiderstand parallelgeschaltet ist, der aus einem Widerstand (R0) in Reihe mit wenigstens einem Strombegrenzungswiderstand (PTC) besteht, der einen positiven Temperaturkoeffizienten für spezifischen Widerstand hat, und daß Mittel (D2, C4, R9, TR2) zur Entregung des Relais (X) vorgesehen sind, wenn der elektrische Kontakt des Zündschlüssels (Ch) sich in der Ausschaltstellung befindet, so daß, wenn der Kontakt (X') offen ist, entweder aufgrund eines Kurzschlusses im fahrzeuginternen elektrischen System oder weil der Zündschlüssel (Ch) abgezogen wurde, der Strom, der durch das fahrzeuginterne elektrische System fließt, nicht einen ersten festgesetzten Wert überschreitet.

2. Schutzvorrichtung (21) nach Anspruch 1,
dadurch gekennzeichnet,
daß der Nebenschlußstromkreis mit einem Wechselstromwiderstand in Reihe geschaltet ist, der aus dem Kontakt (X') des Relais (X) und dem kleinen Wechselstromwiderstand besteht.

3. Schutzvorrichtung (21) nach Anspruch 1,
dadurch gekennzeichnet,
daß im Falle eines Kurzschlusses in einem Teil des fahrzeuginternen elektrischen Systems oder in wenigstens einer der Schmelzsicherungen (F1, F2, F3, F4, F5, FN) bedingt durch einen Stromwert, der niedriger ist als der Stromwert, der für das Eingreifen der entsprechenden Schmelzsicherung notwendig ist, das Abschalten des Zündschlüssels (Ch) dazu führt, daß die Schutzvorrichtung (21) den Kurzschluß auf einen Wert von weniger als einem Ampere begrenzt.

4. Schutzvorrichtung (21) nach Anspruch 1,
dadurch gekennzeichnet,
daß der Strombegrenzungswiderstand (PTC) einen Stromwert durchfließen läßt, der 4 Ampere oder weniger entspricht.

5. Schutzvorrichtung (21) nach Anspruch 1,
dadurch gekennzeichnet,
daß der erste vorher bestimmte Stromwert zwischen 120 und 150 Ampere beträgt, wobei extreme Werte eingeschlossen sind.

6. Schutzvorrichtung (21) nach Anspruch 1,
dadurch gekennzeichnet,
daß die Hysterese des Spannungskomparators (C) durch wenigstens einen Widerstand (R6) und wenigstens einen Transistor (TR5) erzielt wird.

7. Schutzvorrichtung (21) nach Anspruch 1,
dadurch gekennzeichnet,
daß das Relais (X) durch eine Sicherheitsschaltung gesteuert wird, die eine Vielzahl von ersten Transistoren (TR1, TR2) umfaßt.

8. Schutzvorrichtung (21) nach Anspruch 7,
dadurch gekennzeichnet,
daß das Schließen des elektrischen Kontakts des Zündschlüssels (Ch) durch die Mittel zur Entregung gemessen wird, die wenigstens eine Diode (D2) und wenigstens einen Kondensator (C4) umfassen, der durch eine Vielzahl von Widerständen (R7, R8, R9) und durch wenigstens einen zweiten Transistor (TR3) die ersten Transistoren (TR1, TR2) steuert, wobei der Kontakt (X') des Relais (X) geschlossen wird, um das Relais (X) zu entregen.

9. Schutzvorrichtung (21) nach Anspruch 7,
dadurch gekennzeichnet,
daß das Öffnen des elektrischen Kontakts des Zündschlüssels (Ch) dazu führt, daß der Kontakt (X") geöffnet wird, um das fahrzeuginterne elektrische System vor jeglicher Überlastung von dem Moment an, wenn der Schlüssel (Ch) abgezogen wird, zu schützen.

10. Schutzvorrichtung (21) nach Anspruch 1,
dadurch gekennzeichnet,
daß der Widerstand (R0) einen niedrigen Gleichstromwiderstandswert (R0) hat, um die kurzzeitigen Spitzenströme in dem Strombegrenzungswiderstand (PTC) zu begrenzen.

11. Schutzvorrichtung (21) nach Anspruch 7,
dadurch gekennzeichnet,
daß eine Eingabe (H) für Gefahrenbeleuchtung vorgesehen ist, die mit den ersten Transistoren (TR1, TR2) durch wenigstens eine Diode (D1) und mit dem Relais (X) verbunden ist.

12. Schutzvorrichtung (21) nach Anspruch 1,
dadurch gekennzeichnet,
daß sie im Falle eines Zusammenstosses des Kraftfahrzeugs jeglichen Kurzschlußstrom unterbrechen kann.

## Revendications

1. Dispositif de protection à refermeture automatique (21) contre les courts-circuits dans le système électrique de bord de véhicules à moteur, qui est inséré entre le pôle positif (B) de la batterie (22) du véhicule et un point de dérivation (B") dudit système électrique de bord, ledit système électrique de bord comportant un contact électrique associé à la clé de contact (Ch) du véhicule et une pluralité de fusibles de protection (F1, F2, F3, F4, F5, FN), ledit dispositif de protection (21) comportant également:
- un shunt (Sh) pour détecter des courts-circuits qui pourraient se produire dans n'importe quelle portion des câbles dudit système électrique de bord;
- des diviseurs de tension (R1, R2, R3, R4, C1, C2) et des filtres de tension associés aux extrémités dudit shunt (Sh);
- au moins un relais (X), avec un contact (X'), qui peut couper la connexion entre ledit pôle positif de la batterie (22) et ledit point de dérivation (B") du système électrique de bord, ledit point de dérivation (B") étant également connecté à l'alternateur (11) du véhicule;
- un comparateur (C) qui peut détecter un courant maximal et qui a une hystérésis pour empêcher une ouverture et une fermeture cyclique dudit relais (X) sur lesdits courts-circuits,
caractérisé en ce que:
ledit contact (X') du relais (X) est connecté en parallèle sur une impédance faible qui est constituée d'une résistance (RO) en série avec au moins une résistance de limitation de courant (PTC) à coefficient de température positif, et un moyen (D2, C4, R9, TR2) sert à désexciter le relais (X) quand ledit contact électrique associé à la clé de contact (Ch) est ouvert, de façon à ce que, si le contact (X') est ouvert, soit à cause d'un court-circuit dans le système électrique de bord, soit parce que la clé de contact (Ch) a été déconnectée, le courant qui circule dans le système électrique de bord ne dépasse pas une première valeur prédéterminée.

2. Dispositif de protection (21) selon la revendication 1, caractérisé en ce que ledit shunt est connecté en série à une impédance qui est constituée dudit contact (X') du relais (X) et de ladite impédance faible.

3. Dispositif de protection (21) selon la revendication 1, caractérisé en ce que, dans le cas où une partie dudit système électrique de bord ou au moins un desdits fusibles de protection (F1, F2, F3, F4, F5, FN) se met en court-circuit, en raison d'une valeur de courant inférieure à la valeur de courant nécessaire à l'intervention du fusible correspondant, le retrait de la clé de contact (Ch) fait limiter par ledit dispositif de protection (21) le court-circuit à une valeur inférieure à 1 ampère.

4. Dispositif de protection (21) selon la revendication 1, caractérisé en ce que ladite résistance de limitation de courant (PTC) laisse passer un courant d'une valeur inférieure ou égale à 4 ampères.

5. Dispositif de protection (21) selon la revendication 1, caractérisé en ce que ladite première valeur de courant prédéterminée est comprise entre 120 et 150 ampères, valeurs aux bornes incluses.

6. Dispositif de protection (21) selon la revendication 1, caractérisé en ce que ladite hystérésis du comparateur de tension (C) est obtenue au moyen d'une résistance (R6) et d'au moins un transistor (TR5).

7. Dispositif de protection (21) selon la revendication 1, caractérisé en ce que ledit relais (X) est commandé par un circuit électrique de sécurité comportant une pluralité de premiers transistors (TR1, TR2).

8. Dispositif de protection (21) selon la revendication 7, caractérisé en ce que la fermeture dudit contact électrique associé à la clé de contact (Ch) est détectée par ledit moyen de désexcitation, comportant au moins une diode (D2) et au moins un condensateur (C4), qui, à l'aide d'une pluralité de résistances (R7, R8, R9) et d'au moins un deuxième transistor (TR3), commande lesdits premiers transistors (TR1, TR2), ledit contact (X') du relais (X) étant fermé pour exciter ledit relais (X).

9. Dispositif de protection (21) selon la revendication 7, caractérisé en ce que l'ouverture dudit contact électrique associé à la clé de contact (Ch) déclenche l'ouverture du contact (X'), de façon à protéger de toute surcharge le système électrique de bord à partir du moment où la clé de contact (Ch) est retirée.

10. Dispositif de protection (21) selon la revendication 1, caractérisé en ce que ladite résistance (R0) a une faible résistance ohmique (R0) pour limiter les crêtes de courant temporaires dans ladite résistance de limitation de courant (PTC).

11. Dispositif de protection (21) selon la revendication 7, caractérisé en ce qu'il est prévu une entrée (H) pour les feux de détresse, qui est connectée auxdits premiers transistors (TR1, TR2) par l'intermédiaire d'au moins une diode (D1), et audit relais (X).

12. Dispositif de protection (21) selon la revendication 1, caractérisé en ce qu'il est capable de couper tout courant de court-circuit en cas de collision du véhicule à moteur.
